Europäisches Patentamt

European Patent Office

Office européen des brevets

(19)

(11) Publication number: **0 167 472**
**B1**

(12) **EUROPEAN PATENT SPECIFICATION**

(45) Date of publication of patent specification: 27.07.88

(51) Int. Cl.⁴: **B 26 D 7/26, B 26 D 7/12**

(21) Application number: **85630074.4**

(22) Date of filing: **02.05.85**

(54) Cutting edge correction.

(30) Priority: **09.05.84 DE 3417042**

(43) Date of publication of application:
**08.01.86 Bulletin 86/02**

(45) Publication of the grant of the patent:
**27.07.88 Bulletin 88/30**

(84) Designated Contracting States:
**FR GB IT SE**

(56) References cited:
**DE-B-1 294 746**
**GB-A-2 089 269**
**US-A-3 786 705**
**US-A-3 886 833**
**US-A-4 077 291**

(73) Proprietor: **BELOIT CORPORATION**
**P.O. Box 350**
**Beloit Wisconsin 53511 (US)**

(72) Inventor: **Zeyher, Heinz, Dr.**
**Danziger Strasse 128**
**D-7313 Reichenbach / Fils (DE)**
Inventor: **Goerner, Bernd**
**Oehrichstrasse 15**
**D-7315 Weilhem / Teck (DE)**

(74) Representative: **Dennemeyer, John James et al**
**DENNEMEYER & ASSOCIATES Steinstrasse 44**
**D-8000 München 80 (DE)**

Courier Press, Leamington Spa, England.

## Description

The invention relates to a method of the type corresponding to the preamble of claim 1 and also relates to a corresponding longitudinal cutter apparatus.

Such a method and such a longitudinal cutter apparatus are known from the US-A-3 786 705. The carriages with the circular knives are thereby shifted by the conveyor means into predetermined positions which correspond to the desired width of the sub-webs to be produced from a wide paper roll. As long as the position of the cutting edges of the circular knives remains invariable relative to the carriage, this positioning can be arbitrarily repeated and the widths of the subwebs can be set with the tolerance given by the working precision of the conveyor means.

The circular knives, however, must be reground from time to time since the stress and the wear due to the paper webs passing through with speeds up to 2500 meters per minute are considerable. This is particularly true for the driven, so-called ledger (or bottom) blade which is designed pot-like, whereby the shearing interaction with the flat, so-called top cutter occurs at the end face of the edge of the pot. During re-grinding, this pot edge is ground off so that the pot becomes "lower". It can thereby definitely be a matter of amounts of 1 to 2 mm.

When the positioning is restricted to bringing the carriages to a specific location and the position of the cutting edge relative to the carriage has changed, this dislocation enters into the width of the sub-webs produced, these thus deviating from their rated dimension by corresponding amounts.

This is inadmissible in many instances. It is known to compensate the change in the position of the cutting edges due to the grinding with shims. This method wastes time and is subject to error because the needed shims must be determined by means of measurements to be undertaken at every pair of blades and errors due to tolerances remain.

The object of the invention is to create a method and a longitudinal cutter apparatus wherein a positioning of the cutting edges at the circular knives is possible even after a re-grinding thereof in a simpler fashion without shims and, nonetheless, with greater reliability.

This object is achieved in terms of its methodological aspect by means of the features recited in the characterizing part of claim 1.

As in the known embodiment, the positioning of the carriages thus ensues by means of setting the interval between an outer, apparatus-fixed bench mark and a carriage-fixed bench mark. The position of the cutting edge changed by the re-grinding, however, is acquired by means of a measurement and taken into consideration in the control, so that the carriage is not placed at a different position such that the position of the cutting edge again assumes its rated position and the width of the subwebs produced is not influenced by the re-grinding.

This all ensues by means of a measurement given (a) position of the cutting edge changed after the regrinding, so that errors as can occur in the selection of the correct shims and tolerances that may arise no longer play any part.

The inventive solution of the object in terms of its apparatus-related aspect is reflected in claim 2.

A simple formation of the carriage-fixed bench mark which is easy to acquire by means of external measuring devices can, in accord with claim 3, be given by means of an edge at the carriage which, in accord with claim 4, can be formed by a special measuring piece.

In the embodiment of claim 5, the measuring means comprises outer, stationary position sensors past which both the edge of the re-ground circular knive as well as the edge at the measuring piece forming the carriage-fixed bench mark travel and generate pulses when a blade carriage is displaced. These pulses can be employed for determining the spacing (between) the two said edges.

All embodiments known from the Prior Art for this purpose come into consideration as position sensors, for example inductive or magnetic sensors, microswitches mechanically actuated by the edges, photoelectric and pneumatic sensors, etc.

After the blades have been built in, the distance of the cutting edge of the re-ground (or new) ledge (or: bottom) blade from the edge forming the carriage-fixed bench mark is determined at every pair of blade carriages in an operating cycle preceding the positioning in that the blade carriages are conducted past the position sensors respectively intended for them.

The problem thereby arises that the control must be able to uneqivocally allocate the pulses arising when passing the cutting edge and the measuring edge to a specific pair of blade carriages.

The feature of claim 6 serves this purpose. It enables the pulses of the different pairs of blade carriages to be separated from one another. The blade carriages are entrained along the rails by the conveyors means. On the basis of the specified design, the pairs of blade carriages do not reach the allocated position sensors simultaneously but at specific intervals. In this fashion, the signals of the individual position sensors can be separated from one another and be allocated respectively to a specific pair of blade carriages. The signals which appear in a defined displacement range of the conveyor means can only derive from a defined pair of blade carriages.

It is most expedient to have the intervals increase by identical amounts in accord with claim 7.

An exemplary embodiment of the invention is schematically illustrated in the drawing.

Fig. 1 shows a vertical longitudinal section through the essential part of the apparatus;

Fig. 2 shows an elevation according to Fig. 1. from above, partially in section and given omission of the upper deflection drum;

Fig. 3 shows a schematic view of the conveyor means;

Fig. 4 shows a side view of a single ledger (or: bottom) blade carriage;

Fig. 5 shows a view according to Fig. 4 from the left with an additionally indicated position sensor;

Figs. 6 and 7 show schematic sectional views of the locking means contained in the blade carriage;

Fig. 8 shows a single blade pair emphasized in enlarged scale;

Figs. 9 through 11 show an enlargement of the region in Fig. 8 indicated with dot-dash lines given various re-grinding conditions of the ledger (or:bottom) blade;

Fig. 12 is a schematic illustration of the pulses for the control of the conveyor means.

The paper web 1 runs between two deflection drums (or:rollers) 2,3 which are seated in the machine frame M, running vertically in the indicated direction through the apparatus and being longitudinally cut there. The supply reel and the sub-reels onto which the subwebs produced by the longitudinal cuts are rewound are not shown.

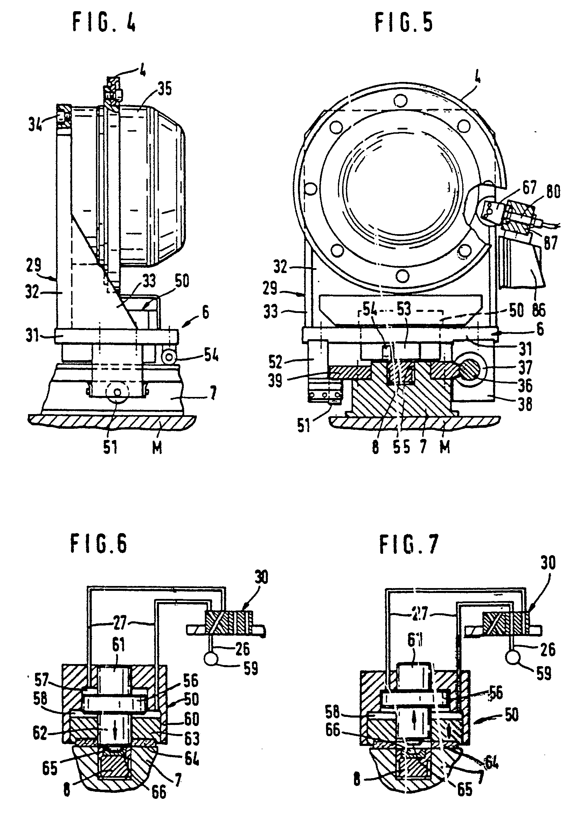

The division of the web ensues by means of interacting circular knives, namely the so-called ledger (or:bottom) blade 4 and the top cutter 5. The ledger (or:bottom) blade 4 is seated at a ledger (or: bottom) blade carriage referenced 6 overall which is guided at a rail 7 connected to the machine frame M and extending transversely across the web width. A conveyor rod 8 is displaceable in longitudinal direction in the rail 7, the ledger (or:bottom) blade carriage 6 being connectible as desired to said conveyor rod 8 in order to displace it along the rail 7 into a desired position which corresponds to the location of the cut in the web 1. The design of the ledger (or:bottom) blade carriage 6 shall be explained in greater detail with reference to Figs. 4 through 7.

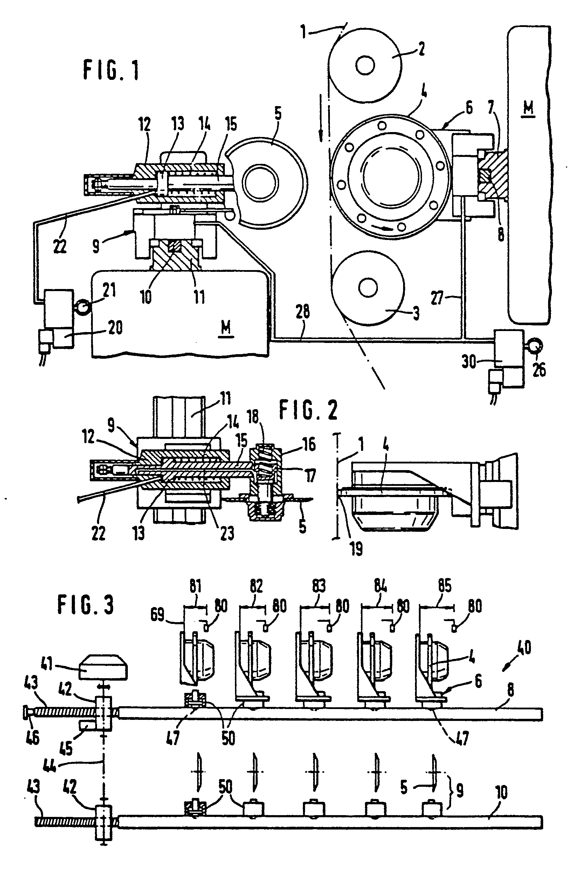

The ledger (or:bottom) blade 4 is driven in the indicated sense, whereas the top cutter 5 does not have a drive but is merely loosely entrained. It is seated at the top cutter carriage referenced overall with 9 which, just like the ledger (or:bottom) blade carriage 6, is displaceable by a conveyor rod 10 along a rail 11 secured to the machine frame M which extends transversely across the web width. A pneumatic piston/cylinder unit 12 is disposed on the ledger (or:bottom) blade carriage 12, the piston 13 thereof being extendable perpendicular to the web 1 against the ledger (or:bottom) blade carriage 6 against the action of a spring 14. Seated at the front end of the piston rod 15 is a further piston/cylinder unit 16 whose axis extends parallel to the axis of the ledger (or:bottom) blade 4 and whose piston is displaceable such against the action of a spring 18 that the top cutter 5 is upwardly entrained according to Fig. 2.

The piston/cylinder unit 12 serves for the control of the adjustment of the top cutter 5 against the ledger (or:bottom) blade 4 (and) the piston/cylinder unit 16 (serves) for producing the seating of the top cutter 5 against the end edge 19 of the ledger (or:bottom) blade 4 which forms the cutting edge, whereby a prescribed cutting pressure is observed. The control ensues by means of a solenoid valve 20 allocated to every top cutter carriage 9, said solenoid valve, when actuated, allowing compressed air from the feed line 21 to proceed via the line 22 behind the piston 13 of the piston/cylinder unit 12, whereby the top cutter 5 according to Fig. 1 is displaced toward the right. When the displacement has been carried out, the channel 23 formed in the piston 13 and in the piston rod 15 comes into communication with the compressed air feed line 22 and the piston/cylinder unit 16 receives compressed air so that the top cutter 5 is drawn against the end face 19 of the ledger (or:bottom) blade 4. The actuation thus ensues in a sequence which prevents the top cutter 5 from striking against the circumference of the ledger (or:bottom) blade 4.

The solenoid valve 30 which is allocated to every blade pair 4, 5 or, respectively, to every carriage pair 6, 9 serves for the initiation of the locking or, respectively, unlocking of the carriages 6, 9 at the appertaining rails 7, 11. The compressed air is advanced via the line 26. The locking and unlocking means explained in yet greater detail in conjunction with Figs. 6 and 7 is of such anature that it either releases the carriages 6, 9 at the rails 7, 11 and simultaneously couples with the conveyor rods 8, 11 (sic) or uncouples therefrom and locks to the rails 7, 11. The actuation of the locking and unlocking fixture occurs by means of the solenoid valve 30 via the lines 27, 28 simultaneously at the carriages 6, 9, so that both carriages 6, 9 can be simultaneously moved.

Numbers of carriages 6, 9 allocated to one another are respectively present corresponding to the number of longitudinal division(s) of the paper web 1 that are desired. In the schematic illustration of the conveyor means of Fig. 3 which is referenced 40 overall, five pairs of carriages are provided, whereby the top cutter carriages 9 are merely indicated by means of the locking and unlocking fixtures 50 and the top cutters 5.

The conveyor rods 8, 10 are displaced in longitudinal direction by a motor operator 41 via worm gearings 42 and ball caster spindles 43. The worm gearings 42 of both conveyor rods 8, 10 are connected to one another via an articulated shaft 44, so that the conveyor rods 8, 10 and, thus, the carriages 6, 9 are always displaced by identical amounts at the rails 7, 11 (Fig. 1).

A pulse generator 45 which resolves the transport motion of the conveyor rod 8 into discrete pulses is situated at the worm gearing 42 of the conveyor rod 8 for the ledger (or:bottom) blade 4. Every counted pulse thus corresponds to a specific transport path of the blades.

At the beginning of the positioning, the conveyor rod 8 is pulled back against a zero dead stop which represents an apparatus-fixed bench mark. The carriages 6 are thereby situated in their starting position which are established by the spacing of index bores 47 in the conveyor rod 8. The cogs of the locking and unlocking fixtures 50 engage into these index bores 47, the design of said fixtures still to be explained in detail with reference to Figs. 6 and 7. In their starting position, however, the carriages are uncoupled from the conveyor rod 8 and are fixed to their rail 7. When, for example, the first carriage from the left according to Fig. 3 is to be brought into a specific position, then it is uncoupled from the rail 7 and coupled to the conveyor rod 8 by means of engagement into the apertaining index bore 47 of the conveyor rod 8. The motor operator 41 is then actuated until, proceeding from the seating against the zero dead stop 46, a specific plurality of pulses of the pulse generator 45 has been traversed and the conveyor rod 8 has covered a corresponding distance. The carriage 6 has then reached its desired position and is uncoupled from the conveyor rod 8 and coupled to the rail 7. This procedure is executed such for all carriages 6 that the conveyor rod 8 executes only a single stroke for the positioning of all carriages 6. All carriages 6 are coupled on in the starting position and are "left standing" in their pre-selected rated position during the stroke.

The respective top cutters 5 at the carriages 9 are thereby also entrained, so that these are also situated in their new positions ready for interaction with the ledger (or:bottom) blades 4.

As may be seen from Figs. 4 and 5, the ledger (or:bottom) blade carriage 6 comprises a motor carrier 29 which (in turn) comprises a base plate 31 extending parallel to the front of the rail 7 as well as a supporting plate 32 perpendicular thereto and to the supporting rail 7, these being additionally connected to one another by means of reinforcing angles 33. The blade motor 35 is secured to the supporting plate 32 via screws 34.

At its front side distanced from the machine frame M, the rail 7 comprises, according to Fig. 5, a circular cross-section guide rod 36 disposed at the right outside of the rail 7 and extending over the entire length thereof, a ball-type nipple 37 which is disposed in a cleat 38 at the underside of the base plate 31 being seated in said ball-type nipple. A guide strip 39 projects at the opposite side, i.e. toward the left in Fig. 5, a roller 51 pressing against the underside thereof, said roller 51 being seated in a carrying member 52 which is likewise secured to the underside of the base plate 31.

The carriage 6 is thus guided in longitudinal direction at the guide rod 36 and is supported against a rotation in accord with Fig. 5 toward the right by means of the roller 51. So that the carriage 6, however, while rotating toward the left, does not lie against the front side of the rail 7 and drag along it, a further roller 54 is provided at a pedestal 53, said further roller 54 running on the front side of the conveyor rail 7 and (being) seated in part at the same time in front of the conveyor rod 8 disposed in the rail 7 which is longitudinally displaceable relative thereto and retaining said conveyor rod 8 in the recess 55 of the rail 7.

The locking and unlocking fixture referenced 50 overall is secured to the base plate 31, said fixture 50 being designed as a piston/cylinder unit comprising a cylinder 60 and a piston 56 comprising piston rods 61, 61 protruding toward both sides. Two cylinder chambers 57, 58 are formed in the cylinder 60 at opposite sides of the piston 56. The cylinder chamber 58 is outwardly limited by a piston 63 likewise guided in the cylinder 60 and penetrated by the piston rod 62 and carries a friction lining 64 at its front side which can lie against the front side of the rail 7.

The solenoid valve 30 already mentioned with reference to Fig. 1 is a two-position valve via which a compressed air source 59 is selectively connectible to the cylinder chambers 57, 58. In the position of Fig. 6, the cylinder chamber 57 is connected and the piston 56 is pressed down, so that the index cog 65 engages into the index bore 66 of the conveyor rod 8. The locking and unlocking fixture 50 is connected to the conveyor rod 8 in this fashion and is entrained by the latter when it moves, so that the entire carriage 6 is correspondingly displaced.

In the position of Fig. 7, the cylinder chamber 58 is connected to the compressed air source 9 and the piston 56 is pressed up. Simultaneously, the piston 63 is pressed down and presses the friction lining 64 against the front side of the rail 7. The roller 51 is supported against these forces. In this operating condition, the carriage 6 is fixed against the rail 7 via the friction lining 64 and the index cog 65 is released from the conveyor rail 8.

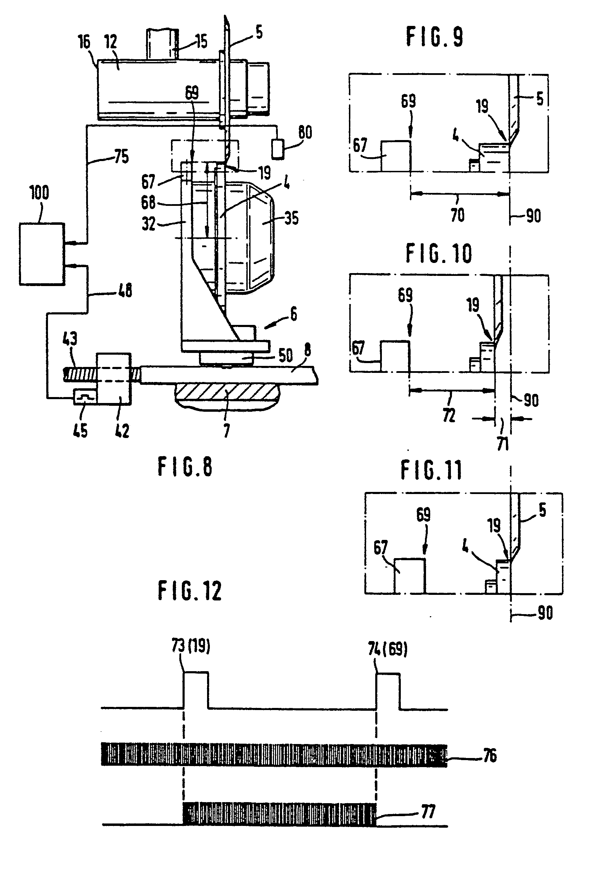

Governing different positions of the cutting edge 19 at a specific carriage 6 shall now be explained with reference to Figs. 8 through 12. A pair of blades 4, 5 has again been shown in Fig. 8, whereby the cutting edge 19 is formed by the end face of the ledger (or:bottom) blade 4. A measuring piece 67 is attached to the supporting plate 32 of the carriage 6, whereby the radial distance 68 of the outside surface from the axis of the ledger (or:bottom) blade 4 is identical to the radius thereof. A reference edge whose position corresponds to the position of the cutting edge 19 is fashioned at what is the right-hand lateral face of the measuring piece 67 according to Fig. 8.

As derives from Fig. 9, the cutting edge 19 and the reference edge 69 have a specific distance 70 from one another given a new ledger (or:bottom) blade 4.

When the ledger (or:bottom) blade 4 has then be re-ground, the distance 72 between the edges 19, 69 has become smaller by the amount 71 that has been ground off, as may be seen from Fig. 10. The ground-off thickness 71 has been shown with exaggeration in Fig. 10; in reality, it is a matter of amounts on the order of 1 to 2 mm.

In the condition according to Fig. 10, thus, the position of the cutting edge 19 relative to the reference edge 69 or, respectively, the carriage 6 has become different overall. If the carriage 6 were thus to be positioned at the same location, the cut in the paper web would occur at a location which is wrong by the amount 71.

In order to prevent this, the amount 71 is automatically incorporated into the control. To this end, position sensors 80 which emit an electrical signal when they are reached or passed by the edges 19 or, respectively, 69 are provided right outside of the ledger (or:bottom) blade 4 or, respectively, the measuring piece 80. In the fashion to be seen from Fig. 5, the position sensors 80 are attached immediately outside of the measuring piece 67, being attached stationary in the apparatus to a strip 87 proceeding continuously across the web width which is disposed on supports 86.

When, thus, the ledger (or:bottom) blades 4 have been replaced or reground and have also been remounted on the carriages 6, the carriages 6 are conducted past the position sensors 80 in the direction proceeding from left to right in Fig. 8. The signal 73 (19) shown at the top in Fig. 12 thereby arises in the position sensor 80 when the cutting edge 19 passes and the signal 74 (69) arises when the reference edge 69 passes. The signals are supplied via the line 75 to the microprocessor controller 100 of the apparatus. At the same time, the microprocessor controller 100 receives the signals of the pulse generator 45 at the drive of the conveyor rod 8 via the line 48. These signals are schematically indicated in the center in Fig. 12 and are referenced 76. The pulse 73 (19) now places a counter unit in the microprocessor controller 100 in operation, this being in turn shut off by the second pulse 74 (69) and counting the pulse set 77 shown at the bottom in Fig. 12 therebetween. The pulse set 77 deriving upon initial installation of the apparatus is stored in the microprocessor controller 100 for each and every carriage 6. After a replacement or, respectively, a re-grinding of the ledger (or:bottom) blades 4, the pulse set 77 then deriving is again counted and compared to the original pulse set 77. A deviation in the number of pulses corresponding to the distance 71 then derives, this being automatically inout into the control of the motor operator 41. The motor operator 41 then does not position a specific carriage 6 in its original position which corresponds to Fig. 9 and which would yield the deviation 71 of the position of the cutting edge 19 from the desired cut line 90, but is positioned in the position shown in Fig. 11 in which the cutting edge 19 is again placed on the desired cut line 90. . ·

The correction of the position of the cutting edge 19 ensues automatically. In order for the microprocessor controller 100 to distinguish between the pulses referenced 73 (19) and 74 (69) in Fig. 12 which arise when passing the position sensors 80 allocated to each and every carriage 6, the position sensors 6 are not all identically positioned relative to the carriages 6 in terms of their control-oriented initial positions but, as may be seen from Fig. 3, are offset from the reference edge 69 of each and every carriage by the distances 81, 82 ... 85 toward the right, the distance 82 thereof being greater by a defined amount than the distance 81, the distance 83 being greater by the same amount than the distance 82, etc. When, thus, all carriages 6 are coupled to the conveyor rod 8 and this is steadily displaced toward the right in accord with Fig. 1, the pulses of the individual position sensors 80 successively arrive in the controller 100 and do not overlap, so that the controller can allocate the various pulses to unequivocally defined carriages 6.

**Claims**

1. Method for controlling the position of the cutting edge (19) of the pairs of circular knives (4,5) of a longitudinal cutter means for webs (1) of paper and the like, said pairs of circular knives (4, 5) being displaceable on carriages (6, 9) on rails (7, 11) proceeding transversely relative to said web (1) whereby said pairs of circular knives (4, 5) are displaced by predetermined positioning distances from an outer, apparatus-fixed bench mark up to a carriage-fixed point, characterized in that the distance of the cutting edge (19) from a location fixed on the carriage(6, 9) of a circular knife (4, 5) is measured and is input into the control as part of the positioning distances.

2. Longitudinal cutter apparatus for webs (1) of paper and the like, comprising a plurality of pairs of circular knives (4, 5) corresponding to the desired cut locations which lie against one another at the edges in axial direction upon formation of a cutting edge (19), comprising rails (7, 11) disposed at both sides of said web (1) transversely relative thereto, carriages (6, 9) on which respectively one circular knife (4, 5) is seated being displaceable at said rails (7, 11), comprising a conveying means (8, 10) for the selective displacement of said carriages (6, 9) to a desired position, comprising a electronic control means (100) having a memory into which the desired positions can be input as distances of a carriage-fixed bench mark from an outer apparatus-fixed bench mark and by means of which said conveying means (8, 10) is controllable such that it automatically displaces said carriages (6, 9) to the appertaining positions, for the implementation of the method of claim 1, characterized in that a measuring means is provided, the distance of said cutting edge (19) in the direction of said rails (7, 11) from a location fixed to one of the appertaining carriages (6, 9) being identifiable by said measuring means for every pair of knives (4, 5) and being inputtable into said memory as part of the respective distance from the outer bench mark (46) which defines the position of said cutting edge (19).

3. Longitudinal cutter apparatus according to claim 2, characterized in that said carriage-fixed location is established by a reference edge (69) on said carriage (6).

4. Longitudinal cutter apparatus according to claim 3, characterized in that said reference edge (69) is fashioned on a measuring piece (67) secured to the motor carrier (32) of said carriage (6), said measuring piece (67) having the same distance from said rail (7) or, respectively, the axis of said circular knife (4) as the circumference of said circular knife (4).

5. Longitudinal cutter apparatus according to one of the claims 2 through 4, characterized in that position sensors (80) allocated to the individual pairs of knives (4, 5) and stationarily disposed in said apparatus at right angles relative to said web (1) are provided, said position sensors emitting electrical signals (73 (19); 74 (69)) when they are reached or, respectively, passed by said reference edge (69) and by said cutting edge (19) when said carriage (6) is displaced by said conveyor means (40).

6. Longitudinal cutter apparatus according to claim 5, characterized in that said position sensors (80) are disposed such that they have different transverse distances from said reference edges (69) of given pairs of carriages (6, 9) situated in the starting position.

7. Longitudinal cutter apparatus according to claim 6, characterized in that said distances (81, 82, 83, 84, 85) increase by identical amounts for given carriages (6) following one another in succession along said rail (7).

## Patentansprüche

1. Verfahren zur Steuerung der Lage der Schneidkanten (19) der auf Schlitten (6, 9) an quer zur Bahn (1) verlaufenden Schienen (7, 11) verschiebbaren Kreismesserpaare (4, 5) einer Längsschneidevorrichtung für Bahnen (1) aus Papier und dergleichen, bei welchem die Kreismesserpaare (4, 5) um vorbestimmte Positionierabstände von einem äußeren, vorrichtungsfesten Fixpunkt bis zu einem schlittenfesten Punkt verschoben werden, dadurch gekennzeichnet, daß der Abstand der Schneidkante (19) von einer am Schlitten (6, 9) eines Kreismessers (4, 5) festen Stelle gemessen und als Teil der Positionierabstände in die Steuerung eingegeben wird.

2. Längsschneidevorrichtung für Bahnen (1) aus Papier und dergleichen, mit einer den gewünschten Trennstellen entsprechenden Anzahl von Kreismesserpaaren (4, 5), die an den Rändern in Achsrichtung aneinander unter Bildung einer Schneidkante (19) anliegen, mit zu beiden Seiten der Bahn (1) quer zu dieser angeordneten Schienen (7, 11), an denen Schlitten (6, 9) verschiebbar sind, an denen jeweils ein Kreismesser (4, 5) gelagert ist, mit einer Transporteinrichtung (8, 10) zum wahlweisen Verschieben der Schlitten (6, 9) zu einer gewünschten Position, mit einer elektronischen Steuereinrichtung (100) mit einem Speicher, in welchen die gewünschten Positionen als Abstände eines schlittenfesten Fixpunkts von einem äußeren vorrichtungsfesten Fixpunkt eingebbar sind und mittels deren die Transporteinrichtung (8, 10) derart steuerbar ist, daß sie die Schlitten (6, 9) automatisch zu den betreffenden Positionen verschiebt, zur Durchführung des Verfahrens nach Anspruch 1, dadurch gekennzeichnet, daß eine Meßeinrichtung vorgesehen ist, mittels derer bei jedem Messerpaar (4, 5) der Abstand in Richtung der Schienen (7, 11) der Schneidkante (19) zu einer an einem der zugehörigen Schlitten (6, 9) festen Stelle ermittelbar und als Teil des jeweiligen die Position der Schneidkante (19) bestimmenden Abstandes von dem äußeren Fixpunkt (46) in den Speicher eingebbar ist.

3. Längsschneidevorrichtung nach Anspruch 2, dadurch gekennzeichnet, daß die schlittenfeste Stelle durch eine Referenzkante (69) an dem Schlitten (6) gegeben ist.

4. Längsschneidevorrichtung nach Anspruch 3, dadurch gekennzeichnet, daß die Referenzkante (69) an einem an dem Motorträger (32) des Schlittens (6) befestigten Meßstück (67) ausgebildet ist, welches den gleichen Abstand von der Schiene bzw. der Achse des Kreismessers (4) wie der Umfang des Kreismessers (4) aufweist.

5. Längsschneidevorrichtung nach einem der Ansprüche 2 bis 4, dadurch gekennzeichnet, daß den einzelnen Messerpaaren (4, 5) zugeordnete, quer zur Bahn (1) in der Vorrichtung feststehend angeordnete Stellungssensoren (80) vorgesehen sind, die, wenn sie beim Verschieben der Schlitten (6) durch die Transporteinrichtung (40) von der Referenzkante (69) und der Schneidkante (19) erreicht bzw. passiert werden, elektrische Signale (73 (19); 74 (69)) abgeben.

6. Längsschneidevorrichtung nach Anspruch 5, dadurch gekennzeichnet, daß die Stellungssensoren (80) so angeordnet sind, daß sie bei in der Ausgangsstellung befindlichen Schlittenpaaren (6, 9) unterschiedliche Querabstände zu den Referenzkanten (69) aufweisen.

7. Längsschneidevorrichtung nach Anspruch 6, dadurch gekennzeichnet, daß die Abstände (81, 82, 83, 84, 85) bei längs der Schiene (7) aufeinanderfolgenden Schlitten (6) um gleichmäßige Beträge zunehmen.

## Revendications

1. Procédé de contrôle de la position des bords tranchants (19) des paires de couteaux circulaires (4, 5) d'un dispositif de coupe longitudinale de bandes (1) de papier et analogues, les dites paires de couteaux circulaires (4, 5) pouvant être déplacées sur des chariots (6, 9) sur des rails (7, 11) courant transversalement par rapport à la dite bande (1), grâce à quoi les dites paires de couteaux circulaires (4, 5) sont déplacées jusqu'à des distances de positionnement prédéterminées depuis un repère extérieur fixe sur l'appareil jusqu'à un point fixe sur le chariot, caractérisé en ce que la distance du bord tranchant (19) à partir d'un emplacement fixe sur le chariot (6, 9) d'un couteau circulaire (4, 5) est mesurée et est introduite dans la commande comme une partie des distances de positionnement.

2. Dispositif de coupe longitudinale de bandes (1) de papier et analogues, comportant plusieurs paires de couteaux circulaires (4, 5) correspondant aux emplacements de coupe souhaités, dont les bords sont juxtaposés dans le sens axial lord de la formation d'un bord tranchant (19), comportant des rails (7, 11) placés de part et d'autre de la dite bande (1) transversalement par rapport à celle-ci, des chariots (6, 9) portant l'un des couteaux circulaires (4, 5), pouvant se déplacer sur les dits rails (7, 11), comportant un dispositif de transport (8, l0) permettant le déplacement sélectif des dits chariots (6, 9) jusqu'à une position désirée, comportant un dispositif de commande électronique (100) doté d'une mémoire dans laquelle les positions souhaitées peuvent être enregistrées en tant que distances d'un point de repère fixe sur le chariot à partir d'un point de repère extérieur fixe sur l'appareil et grâce auquel le dit dispositif de transport (5, 10) peut être commandé de telle façon qu'il déplace automatiquement les dits chariots (6, 9) jusqu'aux positions qu'ils doivent occuper, pour mettre en oeuvre le procédé selon la revendication 1, caractérisé en ce qu'un dispositif de mesure est prévu, la distance du dit tranchant (19) dans le sens des dits rails (7, 11), depuis un point fixe jusqu'aux chariots qui s'y rapportent (6, 9) pouvant être déterminée par le dit dispositif de mesure pour chaque paire de couteaux (4, 5) et pouvant être enregistrée dans la dite mémoire comme une partie de la distance à partir du point de repère extérieur (46) qui définit la position du dit tranchant (19).

3. Dispositif de coupe longitudinale selon la revendication 2, caractérisé en ce que la dite position fixe sur le chariot est déterminée par un bord de référence (69) sur le dit chariot (6).

4. Dispositif de coupe longitudinale selon la revendication 3, caractérisé en ce que le dit bord de référence (69) est établi sur une pièce de mesure (67) fixée au support du moteur (32) du dit chariot (6), la dite pièce de mesure (67) étant à la même distance du dit rail (7) ou, respectivement, de l'axe du dit couteau circulaire (4), que la circonférence du dit couteau circulaire (4).

5. Dispositif de coupe longitudinale suivant l'une des revendications 2 à 4, caractérisé en ce que des détecteurs de position (80) sont attribués aux diverses paires de couteaux (4, 5) et installés de manière fixe dans le dit appareil, perpendiculairement à la dite bande (1), les dits détecteurs de position émettant des signaux électriques (73 (19); 74 (69)) quand ils sont atteints ou, respectivement dépassés par le dit bord de référence (69) et par le dit tranchant (19) quand le dit chariot (6) est déplacé par le dit dispositif de transport (40).

6. Dispositif de coupe longitudinale suivant la revendication 5, caractérisé en ce que les détecteurs de position (80) sont disposés de telle façon que les distances transversales qui les séparent des bords de référence (69) de paires données de chariots (6, 9) placés dans la position de départ ne soient pas identiques.

7. Dispositif de coupe longitudinale suivant la revendication 6, caractérisé en ce que les dites distances (81, 82, 83, 84, 85) s'accroissent de valeurs identiques pour des chariots donnés (6) se suivant le long du dit rail (7).

FIG. 1

FIG. 2

FIG. 3

**FIG. 4**

**FIG.5**

**FIG.6**

**FIG.7**

FIG.9

FIG.10

FIG.11

FIG.8

FIG.12